(19) Europäisches Patentamt
European Patent Office
Office européen des brevets

(11) Publication number: **0 010 991**
**A2**

(12) # EUROPEAN PATENT APPLICATION

(21) Application number: **79302479.5**

(22) Date of filing: **06.11.79**

(51) Int. Cl.$^3$: **F 21 K 2/00**, H 01 J 61/42, C 09 K 11/00, H 01 K 1/32, C 09 K 11/465, C 09 K 11/477

(30) Priority: **06.11.78 US 958232**

(43) Date of publication of application: **14.05.80 Bulletin 80/10**

(84) Designated Contracting States: **DE GB NL**

(71) Applicant: **WESTINGHOUSE ELECTRIC CORPORATION, Westinghouse Building Gateway Center, Pittsburgh Pennsylvania 15222 (US)**

(72) Inventor: **Thornton, William Andrus, 26 Harvard Road, Cranford, New Jersey (US)**
Inventor: **Riedel, Ernest Paul, 4472 Kilmer Drive, Murrysville, Pennsylvania (US)**

(74) Representative: **van Berlyn, Ronald Gilbert, 23, Centre Heights, London, NW3 6JG (GB)**

(54) **Light source for illuminating objects with enhanced perceived coloration.**

(57) Light sources modified to provide enhanced perceived coloration of illuminated objects. Light sources as normally designed, without the present modification, have an envelope-enclosed source of radiations having appreciable emissions in the wavelength range of from 565 nm to 595 nm plus substantial emissions of visible radiations of wavelengths shorter than 565 nm. A phosphor is carried on the surrounding envelope and is operable to absorb radiations in the wavelength range of from 565 nm to 595 nm and to convert absorbed radiations to longer wavelength emission in the range of from 596 nm to 640 nm.

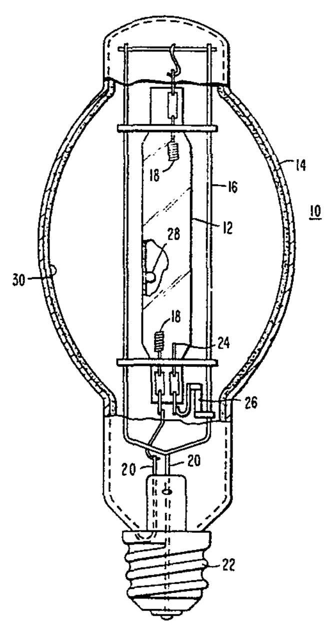


**EP 0 010 991 A2**

# LIGHT SOURCES FOR ILLUMINATING OBJECTS

This invention relates to light sources for illuminating objects and, more particularly, to a light source which is modified to provide enhanced perceived coloration of illuminated objects.

In Journal of the Optical Society of America, Volume 61, No. 9, pp. 1155-1163 (September 1971), article entitled "Luminosity and Color-Rendering Capability of White Light" by W. A. Thornton, it is disclosed that maximum luminous efficacy and color rendering are achieved by blending three spectral lines at about 450 nm, 540 nm and 610 nm. Also the wavelength regions near 500 nm and 580 nm are shown to be disadvantageous with respect to obtaining good color rendering.

In Journal of the Optical Society of America, Volume 62, No. 3, pp. 457-459 (March 1972), article entitled "Three-Color Visual Response" by W. A. Thornton, it is disclosed that various experiments indicate that three-color response of human vision consists of well-separated channels peaking near 450 nm, 540 nm and 610 nm.

In Lighting Design and Application, pp. 51 and 52, December 1972, article entitled "The Quality of White Light" by W. A. Thornton, it is disclosed that by mixing three wavelengths of about 450 nm, 540 nm and 610 nm, colors of illuminated objects can be rendered in a preferential fashion.

U.S. Patent No. 2,748,303 (Thorington) discloses a phosphor coating carried on the inner surface of the outer protective envelope for a high-pressure mercury-vapor discharge lamp, which phosphor corrects the color output of the composite lamp.

U.S. Patent No. 3,602,758 (Thornton and Sausville) discloses a dual phosphor coating which reduces the proportions required for more costly phosphors.

According to the present invention a light source for illuminating objects with an enhanced perceived coloration comprises an electrically energizable source of radiations surrounded by a light-transmitting envelope, said source of radiations when energized having appreciable emissions in the wavelength range of from 565 nm to 595 nm plus substantial emissions of visible wavelengths shorter than 565 nm; characterized in that a layer comprising inorganic phosphor is carried on the inner surface of the light-transmitting envelope, said phosphor being absorptive for radiations in the wavelength range of from 565 nm to 595 nm and transmissive for visible radiations shorter than 565 nm and longer than 595 nm, and said phosphor layer being able to convert a substantial proportion of absorbed radiations in the range of from 565 nm to 595 nm to longer wavelength radiations in the wavelength range of from 596 nm to 640 nm. In this manner, yellow-wavelength appearing radiations are converted to orange to red radiations and the perceived coloration of illuminated objects is enhanced.

In order that the invention can be more clearly understood, convenient embodiments thereof will now be described, by way of example, with reference to the accompanying drawings in which:

Fig. 1 is an elevational view, partly in section, showing a high-pressure mercury-vapor lamp the outer envelope of which is coated with a particular phosphor material;

Fig. 2 is the spectral power distribution for a bare or uncoated HID mercury lamp showing the lamp emission for the wavelength range of from 540 nm to 590 nm;

Fig. 3 is the spectral power distribution for the wavelength range of from 570 nm to 670 nm for a particular phosphor which may be used in accordance with the present invention;

Fig. 4 is a graph showing the excitation spectrum for the wavelength range of from 569 nm to 588 nm for the same phosphor whose emission spectrum is shown in Fig. 3;

Fig. 5 is a graph of color rendering index versus wavelength showing the color rendering index which is obtained from white light composed of three selected emissions of varying wavelengths;

Fig. 6 is a graph of relative intensity versus wavelength wherein the standard photopic curve is shown as a dashed line and a modified eye-response curve is shown as a solid line;

Fig. 7 is a fragmentary enlarged sectional view of a portion of the outer envelope of an HID mercury lamp, such as is shown in Fig. 1, but illustrating an alternative phosphor coating;

Fig. 8 is an enlarged fragmentary sectional view similar to Fig. 7 showing yet another alternative phosphor coating;

Fig. 9 is an elevational view, shown partly in section, of a high-intensity-discharge sodium lamp modified in accordance with the present invention;

Fig. 10 is an elevational view, shown partly in section, of an HID mercury-metal halide lamp modified in accordance with the present invention;

Fig. 11 is an elevational view, shown partly in section, of a fluorescent lamp modified in accordance with the present invention; and

Fig. 12 is an elevational view, shown partly in section, of a standard incandescent-type lamp modified in accordance with the present invention.

Referring to Fig. 1, high-intensity-discharge (HID) lamp 10 comprises an arc tube 12 supported within a light-transmitting protective outer envelope 14 by a conventional supporting frame 16. Electrodes 18 are operatively supported within the arc tube proximate the ends

thereof and are electrically connected through lead-in conductors 20 to a conventional screw-type base 22 for connection to a source of power. One of the electrodes has a starting electrode 24 positioned proximate thereto which is electrically connected through a resistor 26 to the source of power in order to facilitate starting. The arc tube contains a conventional charge of mercury 28 and a small charge of inert ionizable starting gas such as argon at a pressure of 4 torrs.

The spectral power distribution for a bare high-pressure mercury lamp is shown in Fig. 2 for the green and yellow regions of the spectrum. The primary visible emissions for this lamp occur as a green line centered at about 546 nm and two yellow lines centered at about 577 nm and 579 nm. A layer 30 comprising selected inorganic phosphor is carried on the inner surface of the protective outer envelope 14 of the lamp as shown in Fig. 1. A typical phosphor coating weight is two $mg/cm^2$. The phosphor is selected to be absorptive for radiations in the wavelength range of from 565 nm to 595 nm and transmissive for visual radiations shorter than 565 nm and longer than 595 nm, and the phosphor also converts a substantial proportion of absorbed radiations in the wavelength range of from 565 nm to 595 nm to longer wavelength emissions in the range of from 596 nm to 640 nm. In this manner, yellow emissions which are deleterious to a preferred color rendition can be converted to more desirable red emissions, in order to improve the perceived coloration of objects illuminated by the composite mercury lamp.

A variety of phosphors can be used for the foregoing application and in the following Table I are listed five known phosphors which will satisfy the foregoing requirements.

TABLE I

| | |
|---|---|
| Gadolinium antimonate:Eu | $(Gd_{0.9}Eu_{0.1}SbO_4)$ |
| Gadolinium tungstate:Eu | $(Gd_{1.98}Eu_{0.02}WO_6)$ |
| Strontium-sodium titanate:Eu | $(Sr_{1.6}Eu_{0.2}Na_{0.2}TiO_4)$ |
| Calcium-yttrium silicate:Eu | $[Ca_2Y_{7.98}Eu_{0.02}(SiO_4)_6O_2]$ |
| Caldium-Lantuanum silicate:Eu | $[Ca_2La_{7.98}Eu_{0.02}(SiO_4)_6O_2]$ |

The foregoing phosphors are all responsive to certain wavelengths of ultraviolet excitation in order to produce the desired red radiations and they also all have an absorption band in the yellow region of the visible spectrum and convert absorbed yellow radiations into the specified desired reddish radiations. To illustrate, the spectral energy distribution for the emission of strontium-sodium titanate activated by trivalent europium is set forth in Fig. 3. In taking this curve, the phosphor was excited by 360-370 nm ultraviolet and the resolution of the apparatus was one nm. In Fig. 4 is shown the room temperature excitation spectrum of the so-called $^5D_o \rightarrow {^7F_2}$ transition red fluorescence of trivalent europium in the same strontium-sodium titanate matrix, wherein the resolution of the equipment used in taking the curve was four nanometers. Thus, by using this phosphor as a coating, yellow emissions from the mercury discharge are absorbed and converted to desired red emissions.

In Fig. 5 is plotted color-rendering index versus wavelength for each of three emissions combined to make white light. As is well established, the internationally accepted method for standardizing and measuring the color-rendering index of light sources is set forth in the publication of the International Commission on Illumination, identified as Publication C.I.E. No. 13 (E-1.3.2) 1965. The data reported in Fig. 5 are also disclosed in JOSA, Volume 61, No. 9 pp. 1155-1163 (September 1971), article referred to in the Background section. In explanation of Fig. 5, the curves were prepared by utilizing three optimum emissions, namely 450 nm, 540 nm and 610 nm.

Two of these three optimum emissions were maintained at the foregoing specifed wavelengths and the third was varied over a wide range to show the effect on color rendition, with the composite color of the resulting blend of radiations always maintained the same to produce so-called "daylight" white light. By way of further explanation, in Fig. 5 the curve designated "B" for blue was obtained by maintaining the emissions of 540 nm and 610 nm constant, while varying the short wavelength "B" radiations from 410 nm to approximately 500 nm. The curve designated "G" for green represents the results obtained by maintaining the 450 nm and 610 nm radiations constant while varying the middle or "G" radiations, and the curve "R" for red was similarly taken. As shown therein, by minimizing the yellow-appearing radiations and maximizing the other desired radiations, including red radiations of the specified wavelengths, the color rendering capabilities of the light sources are enhanced. In addition, the so-called clarity of vision can be improved as well as the apparent brightness of the objects illuminated.

In Figure 6 is shown the standard photopic curve as a dashed line and this curve is the standard which is used in rating the luminous efficacy for all light sources. This curve is also the standard used for all other light-level measurements, such as are made using foot-candle meters. In accordance with this photopic curve, the eye is extremely sensitive to yellow-appearing radiations. In recent years, reports from scientists throughout the world have cast considerable doubt upon the validity of the standard photopic curve and in Figure 6, superimposed over the dashed photopic curve, is a modified curve setting forth what is believed to be the true response of the human visual system to varying colored lights. As shown, there are three peaks occurring at approximately 450 nm, 540 nm and 610 nm and two valleys occurring in the range of 490 nm (blue-green) and 575 nm (yellow). Thus, by converting the specified yellow-appearing radiations to more desirable red radiations, not

only can the color rendering properties of the light sources be improved, but if this modified curve ultimately proves to be valid, it will mean that the visual system actually responds to or "sees" the reddish radiations better than the yellow radiations. It is pointed out, however, that as of this date, the photopic curve still remains the international standard for rating the luminous efficacy of light sources.

In Figure 7 is shown a fragmentary enlarged sectional view of an alternative embodiment for a portion of the protective outer envelope 14 of the lamp embodiment shown in Figure 1. Two separate layers of phosphor are carried on the interior surface of the envelope 14 with the phosphor layer 30 positioned next to the envelope interior surface being any one or a mixture of the phosphors listed under the foregoing Table 1. The phosphor layer 32 which is carried over the layer 30 is positioned to be nearer the discharge and the phosphor of the layer 32 is also used for purposes of color correcting the discharge. An example of such phosphor is blue-emitting alkaline-earth metal halophosphate activated by divalent europium as disclosed more specifically in U.S. Patent No. 4,038,204 (Wachtel). In such an embodiment, the blue-emitting phosphor layer 32 which is nearest the discharge intercepts a substantial proportion of the ultraviolet radiations and transmits the green and yellow visible radiations emitted by the high pressure mercury discharge. Thus yellow radiations are intercepted by the phosphor layer 30 for conversion to the desired red radiations.

Another alternative embodiment is shown in Figure 8 wherein an additional layer 34 of extremely finely divided light-scattering material such as silica is deposited directly on the envelope interior surface, with the yellow to red converting phosphor layer 30 coated thereover and the blue fluorescing layer 32 coated over the layer 30 to lie nearest the discharge. In such an embodiment, some of longer wavelength radiations, such as yellow radiations which pass the phosphor layer 30 without

being absorbed, are scattered back through the layer 30 so that the composite structure has enhanced absorption characteristics for the yellow radiations for conversion to the desired red radiations. As another possible embodiment, the phosphor layer 30 can have silica mixed therewith, or the phosphors of the layers 30 and 32 can themselves be mixed.

In Figure 9 is shown a high pressure sodium vapor lamp 36 which is modified in accordance with the present invention by carrying on the inner surface of the protective envelope 38 a layer 40 of any of the phosphors, or any mixture thereof, as listed under the foregoing Table 1. Other than the phosphor layer 40, the lamp is generally conventional and comprises an elongated arc tube 42 formed of alumina and having electrodes 44 operatively positioned therein proximate the ends thereof. Lead-in conductors 46, 48 connect to the lamp electrodes through the ends of the arc tube 42 and include a coventional supporting frame 50 which supports the arc tube in predetermined position within the lamp envelope. Connected to the frame 50 is a flexible lead-in conductor 52 to permit expansion and contraction of the arc tube 42 and conventional spring spacers 54 support the frame within the dome portion of the protective envelope 38. To complete the description, the outer envelope normally encloses a hard vacuum which is obtained through flashing getters from suitable getter holders 56. The lead-in conductors 46, 48 are sealed through a conventional stem-press arrangement 58 and connect to the conventional screw-type base 60. In accordance with the present invention, some of the yellow-appearing radiations emitted by the high-pressure sodium discharge are converted to red-appearing radiations by the phosphors as specified.

In Fig. 10 is shown a so-called mercury-metal halide HID lamp 62 modified in accordance with the present invention by incorporating as a layer 64 on the envelope inner surface any of the phosphors, or mixtures thereof, as specified under the foregoing Table 1. Apart from the

phosphor layer, the lamp construction is generally conventional and such a lamp is disclosed in U.S. Patent No. 3,798,487 (Zollweg et al). Briefly, the lamp comprises the arc tube 66 which encloses any of a variety of combinations of mercury plus metal halide 68, as is well-known in the art, operating electrodes 70, starting electrode 72, arc tube supporting frame 74, starting resistor 76, conare sealed to connect to the screw-type base 82. The functioning of the phosphor layer 64 is to convert yellow-appearing radiations to the specified red-appearing radiations, to enhance the perceived coloration of illuminated objects.

The present phosphor can also be incorporated as a part of a fluorescent lamp and such an embodiment is shown in Figure 11, wherein the lamp 82 has the yellow to red converting phosphor carried as a layer 84 proximate the lamp envelope 85 with a layer of conventional halophosphate phosphor 86 coated thereover. In the operation of the lamp, the low-pressure mercury discharge excites the halophosphate phosphor to emit visible radiations, which normally are relatively rich in yellow-appearing radiations. These yellow radiations then excite the phosphor layer 84 to emit the desired red-appearing radiations. The lamp 82 is otherwise conventional and comprises electrodes 88 operatively positioned proximate the ends of the elongated envelope, with conventional stem-press arrangements 90 through which lead-in conductors 92 are sealed to connect to conventional base caps 93 positioned at the ends of the envelope.

In any of the embodiments shown in Figures 9 and 10, the phosphors as listed under Table 1 can be used alone as a separate layer, or mixed with other color-correcting or converting phosphors, or coated as separate layers with or without additional light scattering materials such as shown in Fig. 8. In the case of a fluorescent lamp, it is normally desirable to use the yellow-to-red converting phosphors as a separate layer with the conventional phosphors, such as the well-known halophosphates, coated thereover. Even in this case, however, the yellow-to-red converting phosphor and the halophosphates may be mixed and coated as a single layer, if desired.

As another possible embodiment, in Figure 12 is shown a standard incandescent lamp which is modified to have coated over the envelope interior surface a layer of any of the phosphors which are specified under Table I. In addition, a layer of light scattering material may be carried next to the envelope and the phosphor coated thereover in order to enhance the absorption of yellow radiations from the emissions of the incandescent filament as normally operated. Other than the phosphor layer, the lamp 94 as shown in Figure 12 is generally conventional and comprises the protective outer envelope 96 having the phosphor 98 coated as a layer on the inner surface thereof, and an incandescent filament 100 supported in predetermined position within the outer envelope 96 by a pair of lead-in conductors 102 which connect through a conventional stem-press 104 to a conventional screw-type base 106.

In all of the foregoing embodiments, the light source comprises a source of radiations including a light-transmitting envelope with the light source as normally operated having appreciable emissions in the wavelength range of from 565 nm to 595 nm plus substantial emissions of visible radiations of wavelengths shorter than 565 nm and longer than 595 nm. These light sources are modified by incorporating therein a layer comprising inorganic phosphor which is carried on the light-transmitting envelope with the phosphor being absorptive for radiations in the wavelength range of from 565 nm to 595 nm and transmissive for visible radiations shorter than 565 nm and longer than 595 nm. The phosphor is operable to convert a substantial proportion of absorbed radiations in the wavelength range of from 565 nm to 595 nm to longer wavelength emissions in the range of from 596 nm to 640 nm in order to enhance the perceived coloration of objects which are illuminated by the light source.

The yellow-to-red converting phosphor preferably is in finely divided form, such as the two to ten micron-size range. The phosphor could be formed as a thin film, however, if desired. To protect the phosphor coating from abrasion, it is desirable to coat same on the inner surface of the protective envelopes. Since a yellow-to-red conversion is involved, however, the phosphor could also be coated or carried on the outer surface of the protective envelope.

What we claim is:

1. A light source for illuminating objects with an enhanced perceived coloration which comprises an electrically energizable source of radiations surrounded by a light-transmitting envelope, said source of radiations when energized having appreciable emissions in the wavelength range of from 565 nm to 595 nm plus substantial emissions of visible wavelengths shorter than 565 nm; characterized in that a layer comprising inorganic phosphor is carried on the inner surface of the light-transmitting envelope, said phosphor being absorptive for radiations in the wavelength range of from 565 nm to 595 nm and transmissive for visible radiations shorter than 565 nm and longer than 595 nm, and said phosphor layer being able to convert a substantial proportion of absorbed radiations in the range of from 565 nm to 595 nm to longer wavelength radiations in the wavelength range of from 596 nm to 640 nm.

2. A light source according to claim 1, characterized in that said light source is an incandescent lamp, and said source of radiations is an incandescent filament.

3. A light souce according to claim 1, characterized in that the light source is a fluorescent lamp of the low pressure mercury discharge type, and the envelope has an elongated configuration with the phosphor being in finely divided form and carried on the inner surface thereof.

4. A light source according to claim 1, characterized in that the light source is a high-intensity-discharge lamp which comprises a protective light-transmitting envelope, an arc tube supported within said protective envelope and adapted to have a discharge maintained therein to generate the energized source of radiations, and electrical lead-in means sealed through said protective envelope for connecting said arc tube to an energizing power source.

5. A light source according to claim 4, characterized in that the high-intensity-discharge lamp is a high-pressure sodium discharge lamp, a high-pressure mercury discharge lamp or a high-pressure mercury-metal halide lamp.

6. A light source according to claim 5, characterized in that a layer of finely divided light-scattering material is coated directly onto the inner surface of the envelope, and the phosphor is finely divided and is coated over said layer of light scattering material.

7. A light source according to claim 5, characterized in that the phosphor is finely divided and is carried nearest the inner surface of the envelope, and additional phosphor which converts ultraviolet radiations to visible radiations of predetermined wavelengths is carried over said yellow-absorptive phosphor.

8. A light source according to any of the preceding claims, characterized in that the inorganic phosphor comprises one or more of gadolinium antimonate, gadolinium tungstate, strontium-sodium titanate, calcium-yttrium silicate and calcium lanthanum silicate, all activated by trivalent europium.

FIG.1

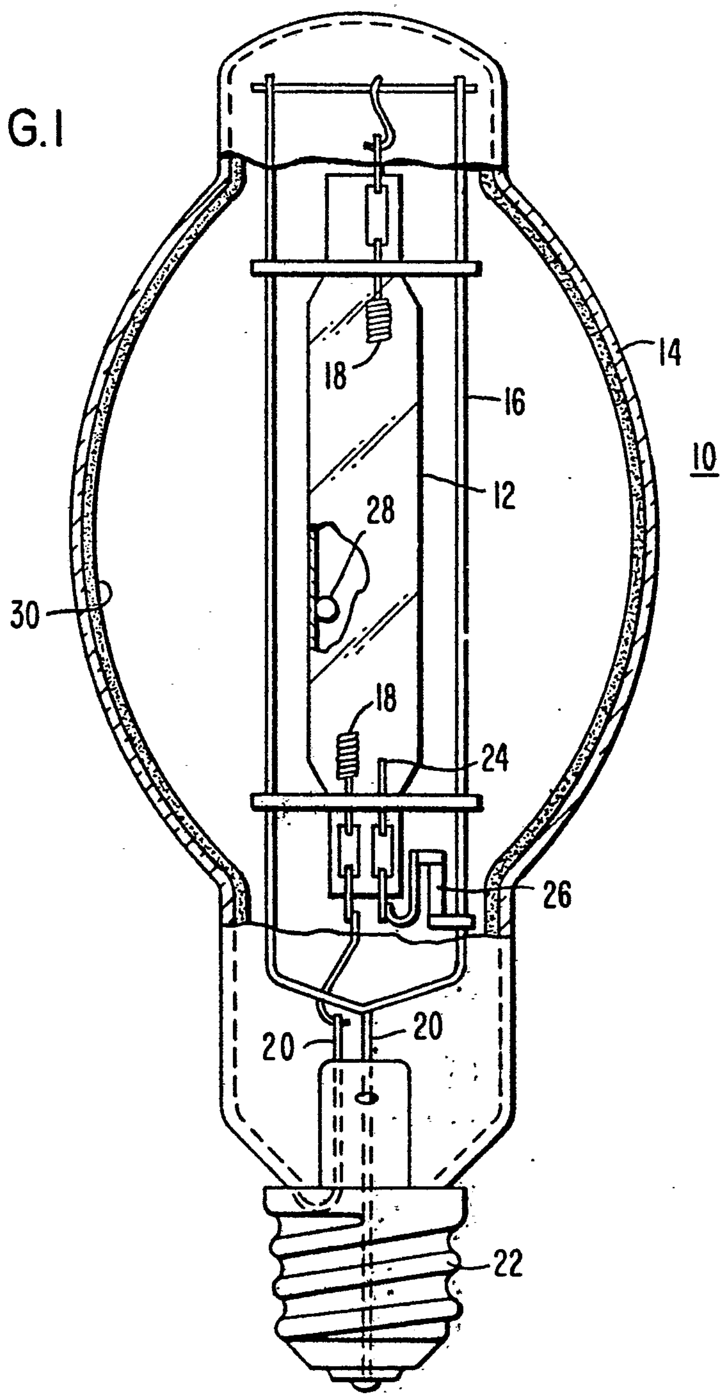

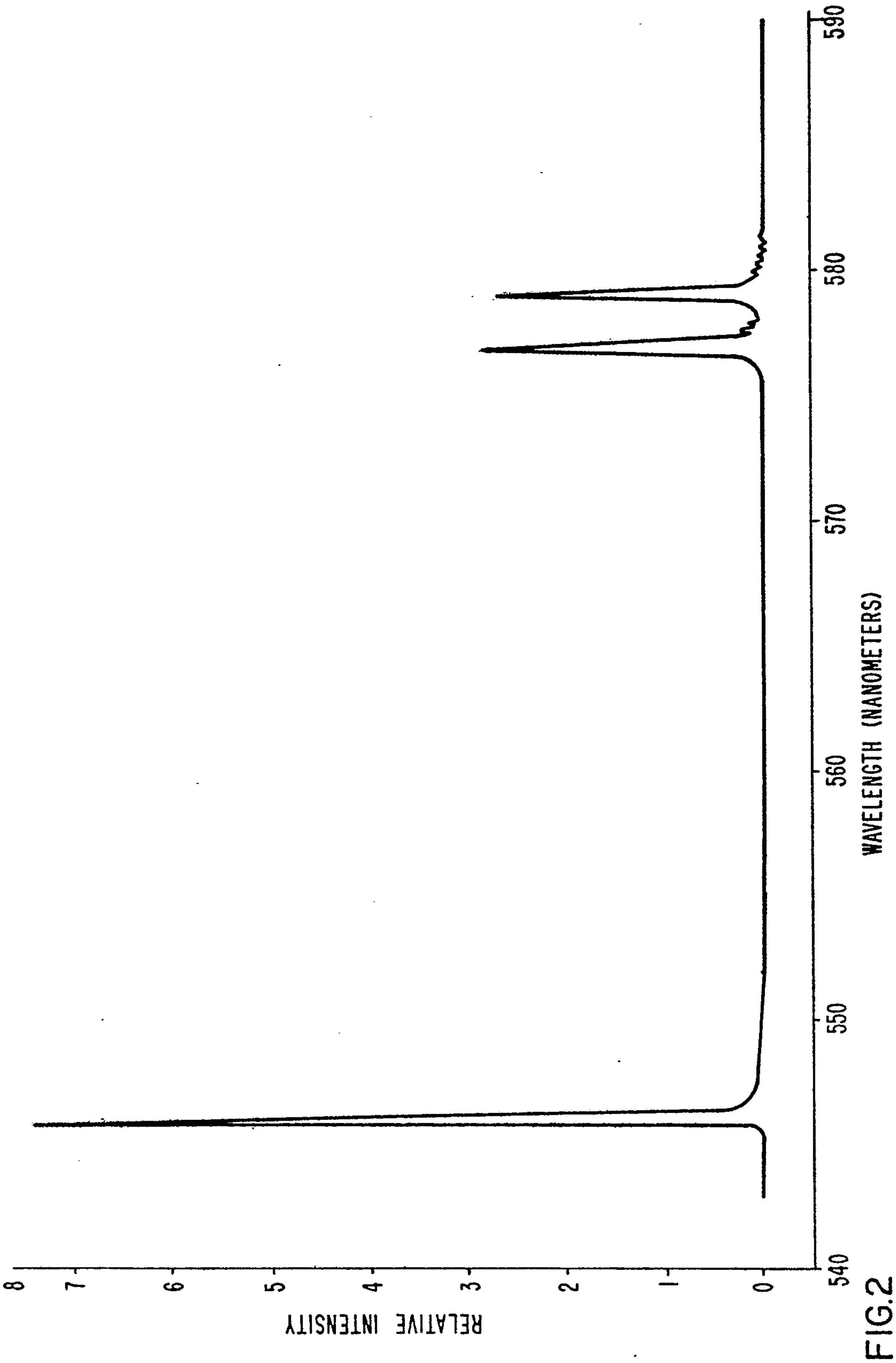
RELATIVE INTENSITY
0
1
2
3
4
5
6
7
8
WAVELENGTH (NANOMETERS)
540
550
560
570
580
590

FIG.2

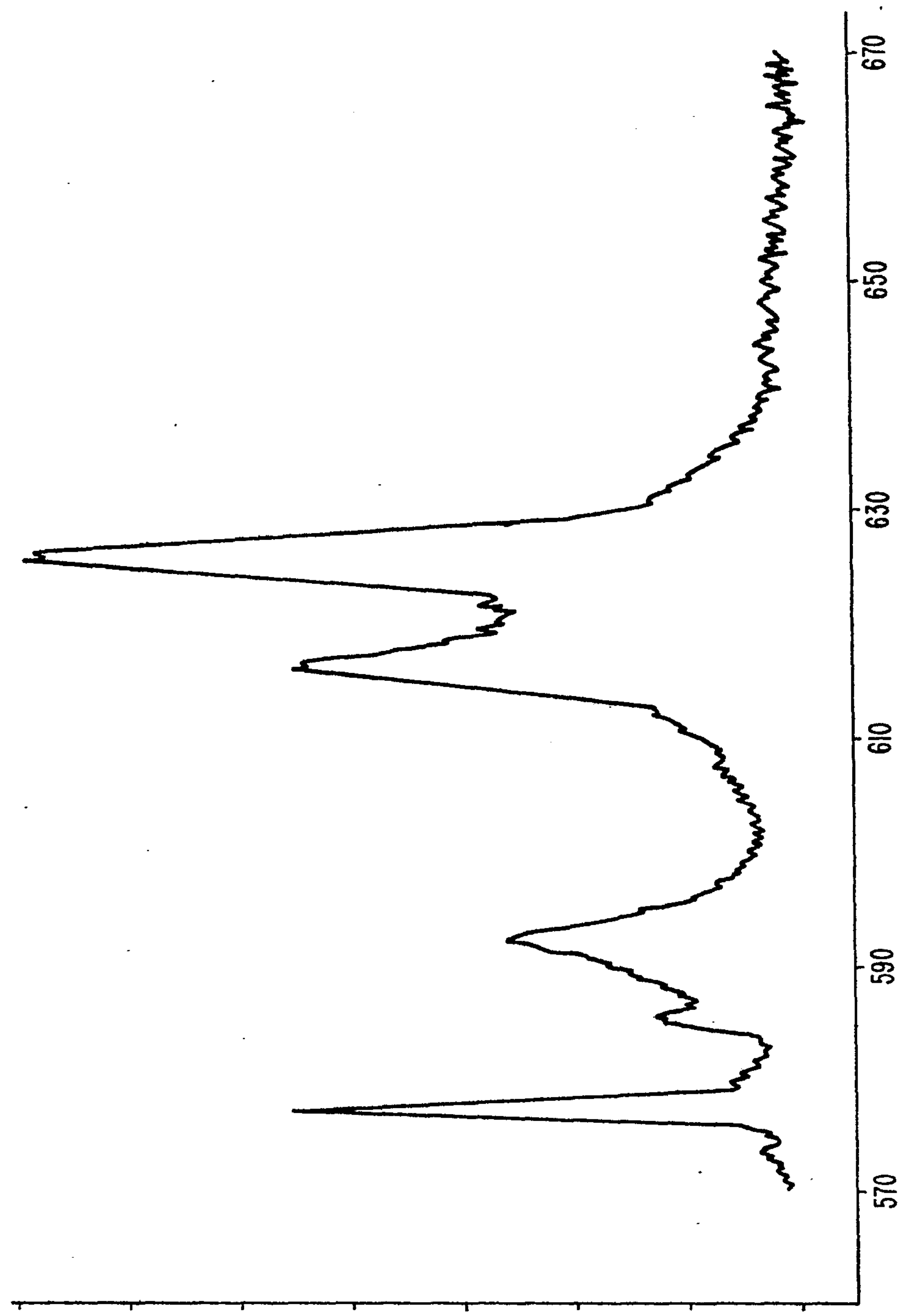
570
590
610
630
650
670
WAVELENGHT (NANOMETERS)
RELATIVE FLUORESCENCE INTENSITY

FIG.3

4/9

0010991

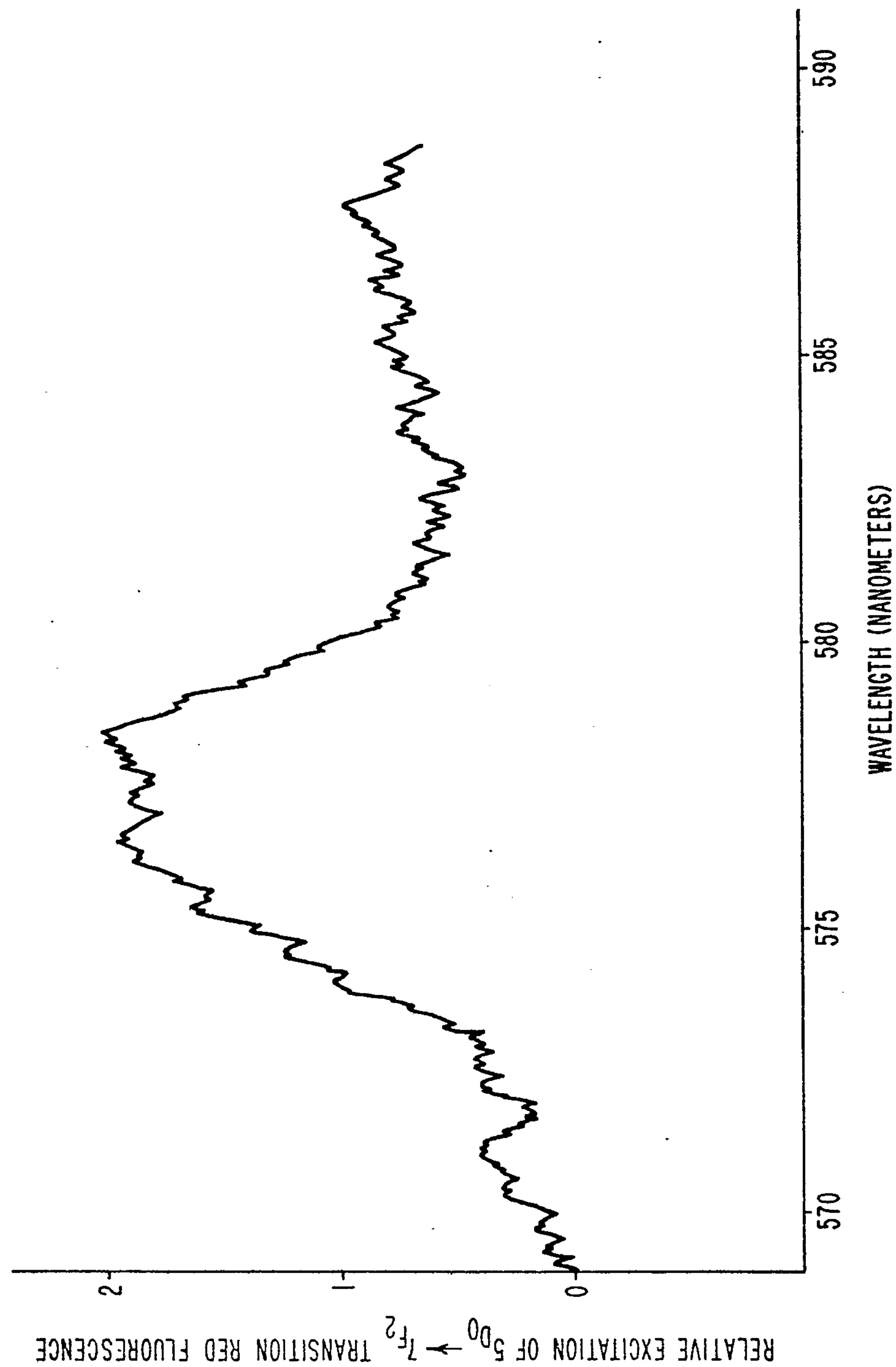


FIG.4

FIG.5

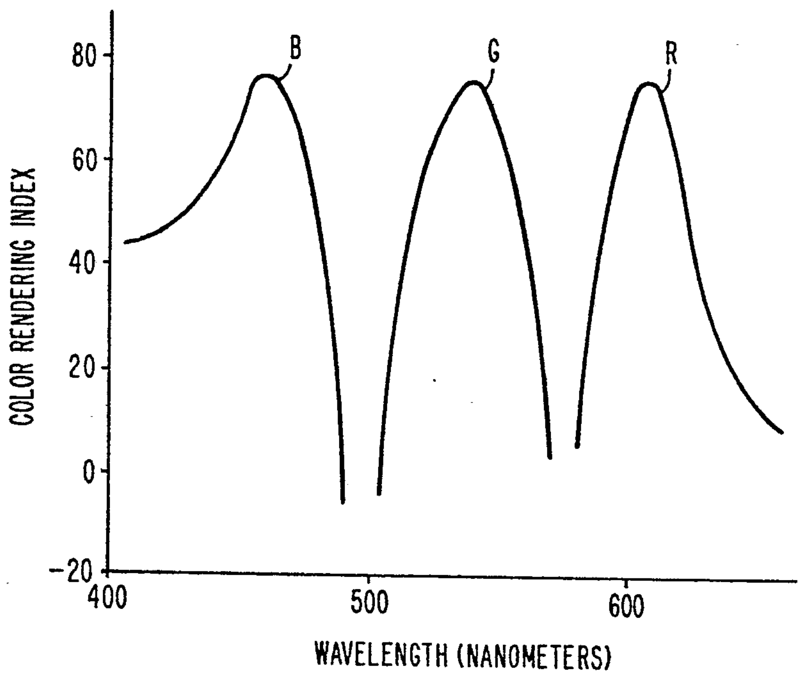
80
60
40
20
0
−20
COLOR RENDERING INDEX
B
G
R
400
500
600
WAVELENGTH (NANOMETERS)

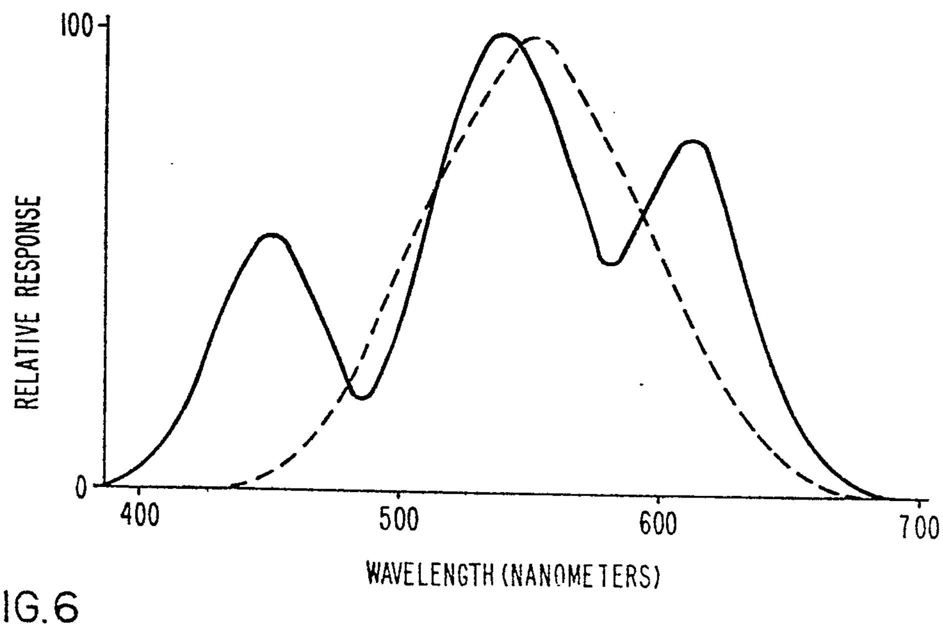
100
0
RELATIVE RESPONSE
400
500
600
700
WAVELENGTH (NANOMETERS)

FIG.6

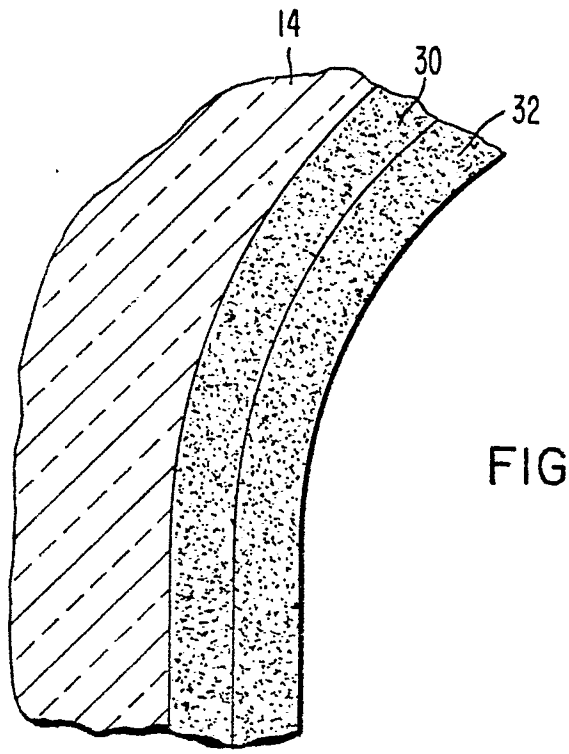


FIG.7

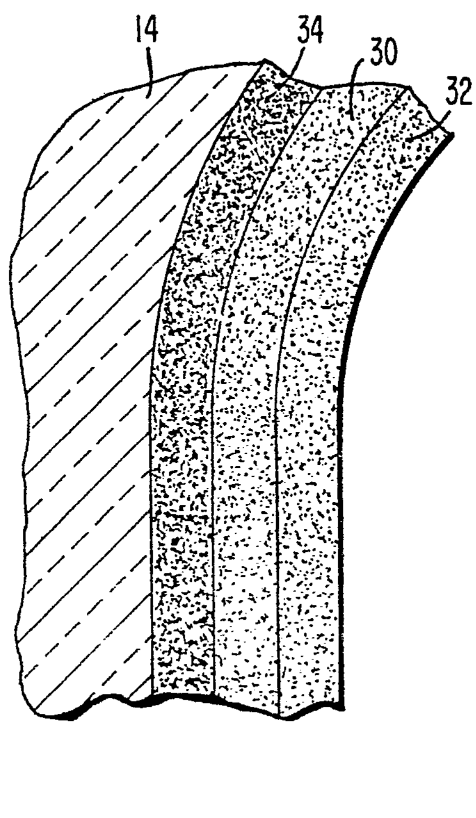


FIG.8

FIG.9

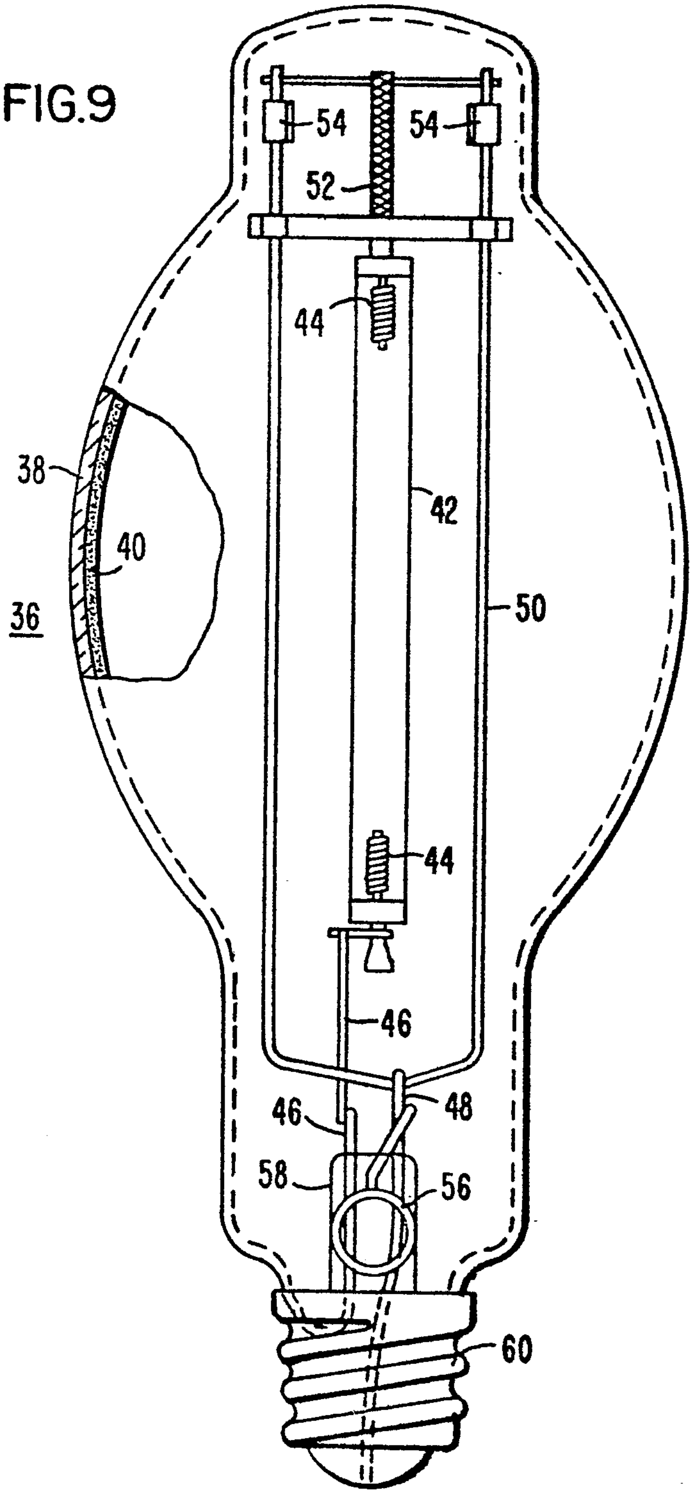

FIG.10

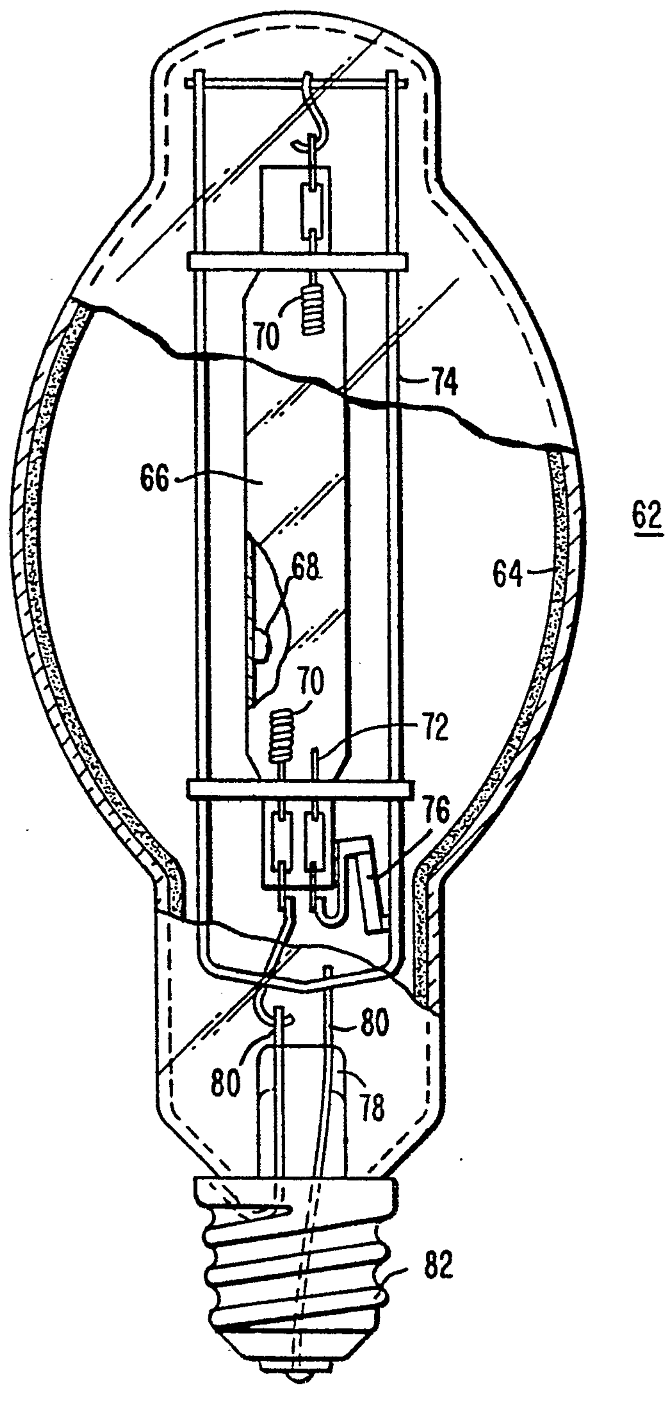

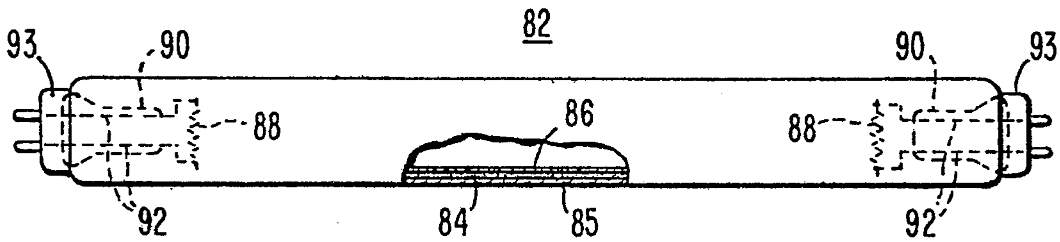


FIG.11

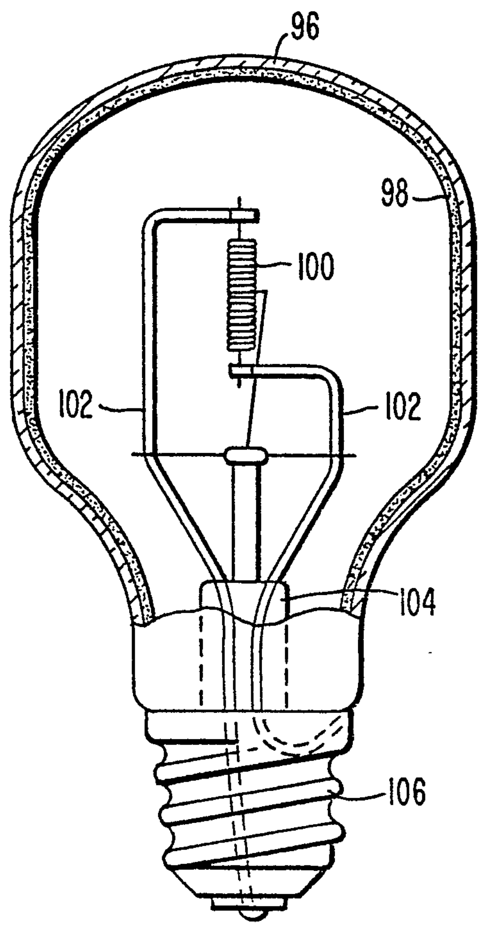


FIG.12